# EUROPEAN PATENT SPECIFICATION

(11) **EP 1 512 887 B1**
(45) Date of publication and mention of the grant of the patent: **28.06.2006**
(21) Application number: 04255246.3
(22) Date of filing: 31.08.2004
(51) Int. Cl.: F16H 7/08

(54) **Hydraulic tensioner**
Hydraulische Spannvorrichtung
Tendeur hydraulique

(30) Priority: 03.09.2003 JP 2003311278; 19.08.2004 US 922207
(43) Date of publication of application: 09.03.2005
(73) Proprietor: BorgWarner Morse TEC Japan K.K., Nabari City, Mie Prefecture 518-0495 (JP)
(72) Inventor: Seungpyo, Shin, Mie Prefecture 518-0495 (JP)
(74) Representative: Lerwill, John

(56) References cited:
- DE-A- 4 431 161
- US-A- 5 304 099

## Description

### BACKGROUND OF THE INVENTION

### FIELD OF THE INVENTION

The present invention relates to a hydraulic tensioner for imparting appropriate tension to a chain, belt or the like, and more particularly, to a hydraulic tensioner having a ratchet mechanism to prevent retraction of a piston at the time of decreased hydraulic pressure, according to preamble of claim 1 and as disclosed in DE-A-4431611.

### DESCRIPTION OF RELATED ART

A hydraulic tensioner generally includes a housing, a piston that is biased in a protruding direction by a spring and fitted slidably into a piston hole formed in the housing, and a fluid chamber defined by the piston and the piston hole of the housing. During operation, the combined efforts of the spring load and the hydraulic pressure in the chamber balances the external force from a chain or belt imparted to the distal end of the piston.

When external force is applied from a chain to the distal end of a piston during inadequate hydraulic pressure in the chamber such as at the time of engine start, the piston is easily forced to retract into the housing, thereby causing noise or oscillation.

In order to prevent such retraction of a piston, various kinds of hydraulic tensioners with ratchet mechanisms have been proposed, such as shown in Japanese patent application laying-open publication No. 7-158703.

The hydraulic tensioner includes a rack received in a longitudinal hole disposed parallel to the piston hole and engaged with a shoulder portion of the piston via a flange, a ratchet received in a lateral hole communicating with the longitudinal hole and engaged with the rack, and a spring biasing the ratchet in an engaging direction with the rack.

During operation, when the piston protrudes, the rack moves along with the piston via the flange in a protruding direction. When the piston retracts due to the external force of the distal end of the piston of the chain, only the piston retracts and as the distal end of the piston moves to the position of the distal end of the rack, the rearward movement of the piston is halted by the engagement of the ratchet with the rack. Additionally, in this case, a stepped portion of the distal end of the piston relative to the distal end of the flange functions to provide backlash for the tensioner.

The prior art tensioner requires a rack discretely from the piston, thereby making the structure of the tensioner complicated.

The present invention addresses such a problem and its object is to provide a hydraulic tensioner with a backlash mechanism that can simplify the structure of the tensioner. Another object of the present invention is to provide a hydraulic tensioner with a backlash mechanism that can apply stable spring force to the pawl member.

### SUMMARY OF THE INVENTION

A hydraulic tensioner according to the present invention includes a housing having an axially extending piston hole formed therein, a piston axially slidable in the piston hole that forms a fluid chamber with the piston hole and is formed with rack teeth on at least a portion of an outer circumference of the piston, a piston spring provided in the piston hole for biasing the piston in a protruding direction, a pawl member provided in the housing that has a teeth portion engageable with the rack teeth of the piston, so as to permit the movement of the piston in a protruding direction but to prevent its movement in a retracting direction, a pawl hole formed in the housing to receive the pawl member with a clearance relative to a front and rear end surface of the pawl member, and a pawl coil spring that is provided in a pawl spring hole formed in the housing and connected to the pawl hole, that biases the pawl member in an engaging direction of the teeth portion of the pawl member with the rack teeth.

According to the present invention, since the rack teeth are formed on the outer circumference of the piston, there is no need to provide a rack discretely from the piston, thereby making the structure simple. Moreover, in this case, since the pawl member has a teeth portion engageable with the rack teeth of the piston disposed with a longitudinal clearance formed relative to the pawl hole, the clearance functions to provide backlash to the tensioner. Thereby, a hydraulic tensioner with a backlash mechanism is achieved with a simple structure.

In one embodiment, the pawl coil spring is coiled in a generally elliptical tubular shape to follow the contour of the inner surface of the pawl spring hole and the long axis of the generally elliptical cross-sectional shape of the pawl coil spring is oriented toward the axial direction of the piston. Also, a wire portion of the pawl coil spring substantially following the long axis contacts an upper surface of the pawl member.

In this case, when the pawl member moves along with the piston during operation, the wire portion of the pawl coil spring substantially following the long axis contacts the upper surface of the pawl member constantly. Thereby, during transfer of the pawl member, contact area of the pawl coil spring with the upper surface of the pawl member can be made nearly constant and thus, compressive force of the pawl coil spring against the pawl member can be made nearly constant. As a result, during operation, constantly stable compressive force is applied to the pawl member.

In another embodiment, the generally elliptical cross-sectional shape of the pawl coil spring is formed of a pair of linear portions following the long axis and disposed opposite each other and a pair of semi-circular portions disposed at opposite ends of the linear portions. The linear portions contact the upper surface of the pawl member.

In this case, during transfer of the pawl member, contact area of the pawl coil spring with the upper surface of the pawl member can be made constant and thus, compressive force of the pawl coil spring against the pawl member can be made constant. As a result, during operation, a constant, more stable compressive force is applied to the pawl member.

The pawl coil spring may have a true elliptical cross-sectional shape.

A cover on the housing may be provided to cover an opening portion of the pawl spring hole to prevent the falling off of the pawl coil spring out of the housing.

### BRIEF DESCRIPTION OF THE DRAWING

- FIG. 1: is a perspective view of a hydraulic tensioner without a cover according to an embodiment of the present invention.
- FIG. 2: is a perspective view of a hydraulic tensioner with a cover attached according to an embodiment of the present invention.
- FIG. 3: is a longitudinal sectional view of a hydraulic tensioner of FIG. 2.
- FIG. 4: is a top plan view illustrating a positional relationship between the elliptically coiled pawl coil spring and the pawl member according to the hydraulic tensioner of the present invention.
- FIG. 5: is a top plan view illustrating a positional relationship between the cylindrically coiled pawl coil spring of the prior art and the pawl member for comparison to FIG.4.

### DETAILED DESCRIPTION OF THE INVENTION

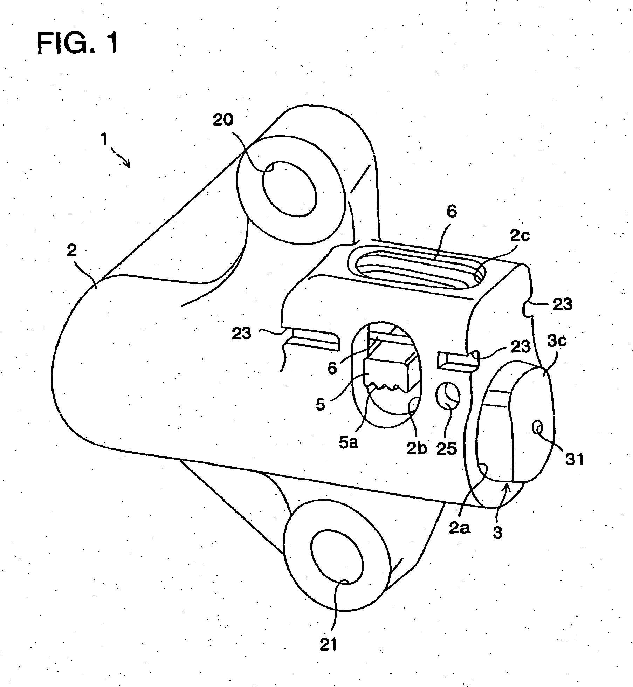

As shown in FIGS. 1-3, a hydraulic tensioner 1 includes a housing 2 with an axially extending piston bore 2a, one end of which opens outside, a hollow piston 3 fitted axially slidable in the bore 2a, and a piston spring 4 provided in the bore 2a and biasing the hollow piston 3 in a protruding direction from the bore 2a.

The housing 2 has attachment holes 20, 21 for inserting bolts (not shown) to fit the tensioner 1 onto the engine. Inside the housing 2, a fluid chamber 30 is defined by an inner space 3a formed in the piston 3 and an inside wall surface of the bore 2a. On the bottom of the housing 2, an inlet passage 10 is formed to introduce engine oil from an outside source of pressurized fluid (not shown) to the fluid chamber 30.

A check valve 7 is provided at a bottom portion of the bore 2a in the housing 2 to permit flow of fluid into the chamber 30 from the inlet passage 10 but to block fluid flow in a reverse direction. Here, a ball-type check valve is used, but any other suitable structure may be employed to form a check valve.

A vent disk 8 is provided on the top side of the inner space 3a of the piston 3 to discharge air trapped in the fluid chamber 30 to the outside of the tensioner and to control leakage of the fluid from the fluid chamber 30. The vent disk 8 has a spiral groove (not shown) on the side surface thereof and a shaft portion 8a. The top portion of the piston 3 has an axially extending through hole 31. Air in the fluid chamber 30 along with the fluid containing the air is discharged to the outside the tensioner from the spiral groove of the vent disk 8 through the hole 31. The piston spring 4 is provided around the shaft portion 8a of the vent disk 8 and an end of the piston spring 4 biases the vent disk 8 toward the top portion of the piston 3.

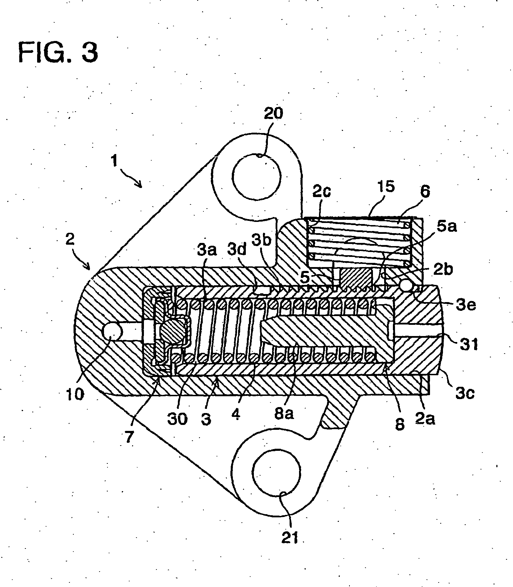

Rack teeth 3b are formed on a portion of an outer circumference of the piston 3. On the other hand, a pawl hole 2b opening into the piston bore 2a is formed in the housing 2. A pawl member 5 is disposed in the pawl hole 2b. The pawl member 5 has a teeth portion 5a formed on the bottom surface thereof. The teeth portion 5a is engageable with the rack teeth 3b of the piston 3 so as to permit the movement of the piston 3 in a protruding direction and to restrain the rearward movement. An axial clearance is formed between the pawl hole 2b and the front and rear surface of the pawl member 5 (see FIG. 3). The pawl member 5 can be axially translatable in the pawl hole 2b by the length of such a clearance.

In the housing 2, a pawl spring hole 2c is formed that opens upwardly in communication with the pawl hole 2b. The pawl spring hole 2c is formed in a generally elliptical cross-sectional shape. In the pawl spring hole 2c, a pawl coil spring 6 is provided in a compressive state to bias the pawl member 5 so that the teeth portion 5a of the pawl member 5 can engage with the rack teeth 3b of the piston 3. The pawl coil spring 6 is coiled in a generally elliptical shape to follow the inner circumference of the pawl spring hole 2c.

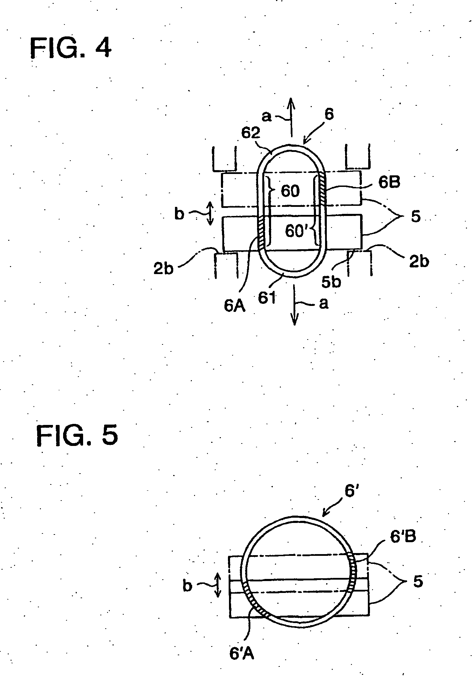

As shown in FIG.4, the vertical direction a of the long axis of the generally elliptical cross-sectional shape of the pawl coil spring 6 coincides with an axial direction of the piston 3. Wire portions 60, 60' disposed at the lower end of the pawl coil spring 6 and substantially parallel to the direction of the long axis contact the upper surface of the pawl member 5.

In the embodiment shown in FIG. 4, wire portions 60, 60' of the pawl coil spring 6 that are disposed opposite each other extend linearly. At opposite ends of the wire portions 60, 60', semi-circular portions 61, 62 are formed, respectively.

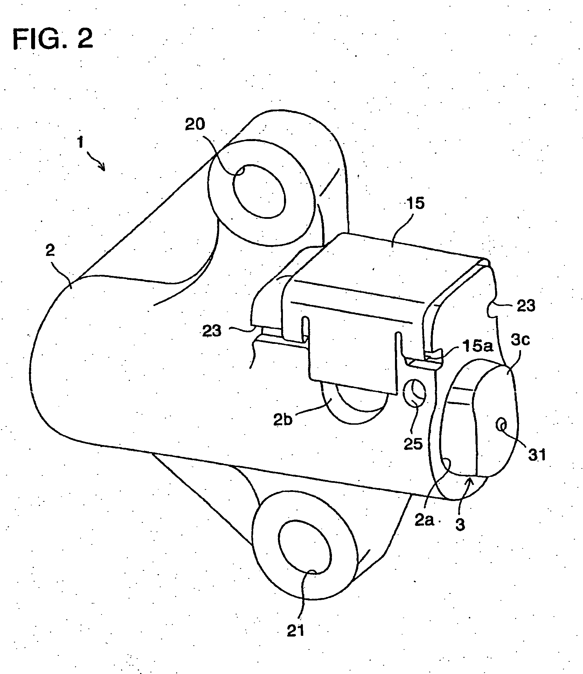

Also, at an opening portion of the pawl spring hole 2c of the housing 2, a cover 15 is provided to cover the opening portion (see FIG. 2). The cover 15 prevents the pawl coil spring 6 from falling out of the pawl spring hole 2c. The cover 15 is formed by bending a metal sheet in a U-shape. The cover 15 also has a plurality of bent portions 15a at lower ends thereof, which are adapted to engage a plurality of concavities 23 formed on the housing 2 for attachment of the cover 15 to the housing 2.

In the vicinity of the opening portion of the piston hole 2a of the housing 2, a laterally extending through hole 25 is formed, as shown in FIGS. 1 and 2. On the top portion of the piston 3, a laterally extending groove 3e is formed, as shown in FIG. 3. The through hole 25 and engagement groove 3e are provided to maintain the piston 2 in a retracted state at the time of shipment of the tensioner. The piston 2 is maintained in a retracted state by inserting a retaining pin (not shown) into the through hole 25 and the engagement groove 3e when they are aligned with each other.

At the back of the rearmost tooth of the rack teeth 3b of the piston 3, a stop groove 3d is formed. The stop groove 3d is provided to prevent further protrusion of the piston 3 by the engagement with the teeth portion 5a of the pawl member 5.

When the chain slacks or the tension in the chain decreases during operation, the force of the piston spring 4 causes the piston 3 to protrude from the housing 2. Then, the piston 3 moves in the arrow marked direction b along with the pawl member 5 and the teeth portion 5a engages with the rack teeth 3b or with the rack teeth 3b passing over the several teeth portion 5a of the pawl member 5 (see the solid line and dashed line of FIG. 4).

Protruding movement of the piston 3 creates a vacuum condition in the fluid chamber 30, thereby causing the check valve 7 to open to introduce engine oil into the fluid chamber 30 through the check valve 7 from the inlet passage 10. As a result, combined efforts of the force of the piston spring 4 and the hydraulic pressure of the fluid chamber 30 act upon the chain via the tensioner arm to maintain tension in the chain.

Next, when the chain tension increases and compressive force from the chain presses against the piston 3, the piston 3 retracts into the housing 2. That is, as shown by the dashed line and the solid line of FIG.4, the piston 3 moves in the direction of the arrow marked b along with the pawl member 5 with the engagement of the rack teeth 3b of the piston 3 with the teeth portion 5a of the pawl member 5 being maintained. When the rear end surface 5a of the pawl member 5 comes into contact with the inside wall surface of the pawl hole 2b, the piston 3 stops. During this movement of the pawl member 5, a clearance is formed between the rear end surface 5b of the pawl member 5 and the inside wall surface of the pawl hole 2b prior to the transfer of the pawl member 5 which functions to provide backlash at the time of rearward movement of the piston 3. Such backlash can relieve shock load to the piston 3 even in the case where the chain has applied an excessive load to the piston.

In this case, the pawl member 5 having the teeth portion 5a engageable with the rack teeth 3b of the piston 3 is disposed with a longitudinal clearance formed relative to the pawl hole 2b, thereby simplifying the structure of a hydraulic tensioner with a backlash mechanism. Also, in this case, the rack teeth 3b are formed around the outer circumference of the piston 3, which eliminates the necessity for providing a rack discretely from the piston, thereby simplifying the entire structure of the tensioner. Moreover, in this case, when the pawl member 5 moves in conjunction with the forward and rearward movement of the piston 3, as shown in FIG. 4, the pawl member 5 is in constant contact with the linear wire portions 60, 60' of the pawl coil spring 6.

The contact portions of the pawl coil spring 6 on the pawl member 5 before and after the transfer of the pawl member 5 are designated by the hatched portions 6A, 6B, respectively. The contact lengths and areas of the hatched portions 6A, 6B are the same. Thereby, the compressive force of the pawl coil spring 6 against the pawl member 5 is not changed in accordance with the transfer of the pawl member 5. The spring load of the pawl coil spring 6 relative to the pawl member 5 can thus be made constant. As a result, during operation, a constantly stable compressive load can be applied to the pawl member 5.

Next, for comparison with the present invention, a pawl coil spring in a cylindrical shape, which was typically used in the prior art, is shown in FIG. 5. In FIG. 5, like reference numbers indicate identical or functionally similar elements.

In this case, since the pawl coil spring 6' has a round cross-sectional shape, the lengths and thus the areas of the contact portions 6'A, 6'B of the pawl coil spring 6' are different between before and after the transfer of the pawl member 5. Therefore, compressive force of the pawl coil spring 6' relative to the pawl member 5 may be altered in accordance with the pawl member 5.

In contrast, according to the present invention, since the pawl member 5 is constantly in contact with the linear portions of the pawl coil spring 6 before and after its transfer, the contact area of the pawl coil spring 6 can be made constant, and thus constant compressive force relative to the pawl member 5 can be maintained.

In the embodiment shown in figure 4, the pawl coil spring 6 has a cross-sectional shape formed of a pair of linear portions and semi-circular portions, which is of the shape described mathematically as a "Cassini ellipse". However, it will be understood by one skilled in the art that the spring of the present invention may also have a conventional elliptical cross-sectional shape, in which the linear portions are slightly curved. For the purposes of this invention it will be understood that when the term "elliptical" or "generally elliptical" is used, what is meant is either a Cassini ellipse or a conventional ellipse or similar figures.

Also, in the above-mentioned embodiment, the cover 15 is attached to the tensioner but it may be omitted. In this case, for example, the opening portion of the pawl spring hole 2c of the housing 2 needs to be caulked to prevent the pawl coil spring 6 from falling out of the pawl spring hole 2c.

Accordingly, it is to be understood that the embodiments of the invention herein described are merely illustrative of the application of the principles of the invention. Reference herein to details of the illustrated embodiments is not intended to limit the scope of the claims, which themselves recite those features regarded as essential to the invention.

## Claims

1. A hydraulic tensioner (1) for imparting tension to a chain comprising:
a housing (2) having an axially extending piston hole (2a), the piston hole having at least one end open to atmosphere, a pawl spring hole (2c) extending inwards towards the piston hole from an outer surface of the housing, and a pawl hole (2b) communicating between the piston hole and the pawl spring hole (2c);
a piston (3) having a first end for applying tension to the chain and a second end having rack teeth (3b) formed at least on a portion of an outer circumference thereof, the piston being axially slidable and forming a fluid chamber (30) between the second end and the end of the piston hole of the housing;
a piston spring (4) in the fluid chamber (30) of the housing for biasing the piston in a protruding direction;
a pawl member (5) having teeth (5a) formed on a lower surface thereof and engageable with the rack teeth (3b) of the piston (3), wherein the teeth and the teeth of the pawl member permit movement of the piston in a protruding direction but prevent movement of the piston in a retracting direction;
a pawl coil spring (6) for biasing the teeth (5a) of the pawl member (5) to engage the rack teeth (3b) of the piston (3) located in the pawl spring hole (2c) **characterized in that** said pawl coil spring (6) having an elliptical cross-sectional shape having: a pair of linear portions (60, 60') disposed opposite each other and a long axis, and a pair of semi-circular portions (61,62) disposed at opposite ends of the linear portions,
wherein the pawl hole (2b) is located relative to the pawl spring hole (2c) such that the linear portions of the pawl coil spring contact an upper surface of the pawl member (5).

2. The hydraulic tensioner of claim 1, wherein the pawl spring hole has an elliptical cross-sectional shape.

3. The hydraulic tensioner of claim 1 or 2, wherein a long axis of the elliptical cross-sectional shape of the pawl coil spring is oriented toward an axial direction of the piston.

4. The hydraulic tensioner of claim 1, 2 or 3, further comprising a cover that covers the pawl spring hole in the housing.

## Patentansprüche

1. Hydraulische Spannvorrichtung (1) zur Aufbringung einer Spannung auf eine Kette mit
einem Gehäuse (2) mit einem sich axial erstreckenden Kolbenloch (2a), das mindestens ein Ende aufweist, das zur Atmosphäre hin offen ist, einem Klinkenfederloch (2c), das sich von einer Außenfläche des Gehäuses nach innen in Richtung auf das Kolbenloch erstreckt, und einem Klinkenloch (2b), das eine Verbindung zwischen dem Kolbenloch und dem Klinkenfederloch (2c) herstellt;
einem Kolben (3) mit einem ersten Ende zur Aufbringung einer Spannung auf die Kette und einem zweiten Ende mit Zahnstangenzähnen (3b), die mindestens auf einem Abschnitt des Außenumfanges des Kolbens ausgebildet sind, wobei der Kolben axial gleiten kann und eine Strömungsmittelkammer (30) zwischen dem zweiten Ende und dem Ende des Kolbenloches des Gehäuses bildet;
einer Kolbenfeder (4) in der Strömungsmittelkammer (30) des Gehäuses, um den Kolben in einer vorstehenden Richtung vorzuspannen;
einem Klinkenelement (5) mit Zähnen (5a), die auf einer unteren Fläche desselben ausgebildet und mit den Zahnstangenzähnen (3b) des Kolbens (3) in Eingriff bringbar sind, wobei diese Zähne und die zähne des Klinkenelementes eine Bewegung des Kolbens in einer vorstehenden Richtung ermöglichen, jedoch eine Bewegung in Rückzugsrichtung des Kolbens verhindern;
einer Klinkenschraubenfeder (6) zum Vorspannen der Zähne (5a) des Klinkenelementes (5) zum Eingriff mit den Zahnstangenzähnen (3b) des Kolbens (3), die im Klinkenfederloch (2c) angeordnet sind,
**dadurch gekennzeichnet, dass** die Klinkenschraubenfeder (6) eine elliptische Querschnittsform besitzt, die ein Paar von linearen Abschnitten (60, 60'), welche gegenüberliegend voneinander angeordnet sind, eine Längsachse und ein Paar von halbkreisförmigen Abschnitten (61, 62), die an gegenüberliegenden Enden der linearen Abschnitte angeordnet sind, aufweist, und
wobei das Klinkenloch (2b) so relativ zum Klinkenfederloch (2c) angeordnet ist, dass die linearen Abschnitte der Klinkenschraubenfeder eine obere Fläche des Klinkenelementes (5) kontaktieren.

2. Hydraulische Spannvorrichtung nach Anspruch 1, bei der das Klinkenfederloch eine elliptische Querschnittsform besitzt.

3. Hydraulische Spannvorrichtung nach Anspruch 1 oder 2, bei der eine Längsachse der elliptischen Querschnittsform der Klinkenschraubenfeder in einer axialen Richtung des Kolbens orientiert ist.

4. Hydraulische Spannvorrichtung nach Anspruch 1, 2 oder 3, die des weiteren eine Abdeckung aufweist, welche das Klinkenfederloch im Gehäuse abdeckt.

## Revendications

1. Tendeur hydraulique (1) pour donner une tension à une chaîne comprenant :
un carter (2) ayant un trou de piston s'étendant de manière axiale (2a), le trou de piston ayant au moins une extrémité ouverte à l'atmosphère, un trou de ressort de cliquet (2c) s'étendant vers l'intérieur vers le trou de piston depuis une surface externe du carter, et un trou de cliquet (2b) communiquant entre le trou de piston et le trou de ressort de cliquet (2c) ;
un piston (3) ayant une première extrémité pour appliquer une tension à la chaîne et une seconde extrémité ayant des dents de crémaillère (3b) formées au moins sur une partie d'une circonférence externe de celui-là, le piston pouvant être coulissé de manière axiale et formant une chambre de fluide (30) entre la seconde extrémité et l'extrémité du trou de piston du carter ;
un ressort de piston (4) dans la chambre de fluide (30) du carter pour solliciter le piston dans une direction saillante ;
un organe à cliquet (5) ayant des dents (5a) formées sur une surface inférieure de celui-là et qui peuvent être mises en prise avec les dents de crémaillère (3b) du piston (3), dans lequel les dents et les dents de l'organe à cliquet permettent le mouvement du piston dans une direction saillante mais empêchent le mouvement du piston dans une direction de rappel ;
un ressort hélicoïdal de cliquet (6) pour solliciter les dents (5a) de l'organe à cliquet (5) pour mettre en prise les dents de crémaillère (3b) du piston (3) situé dans le trou de ressort de crémaillère (2c), **caractérisé en ce que** ledit ressort de cliquet (6) ayant une forme en coupe transversale elliptique ayant : une paire de parties linéaires (60, 60') disposées de manière opposée l'une par rapport à l'autre et un axe long et une paire de parties semi-circulaires (61, 62) disposées aux extrémités opposées des parties linéaires,
dans lequel le trou de cliquet (2b) est situé par rapport au trou de ressort de cliquet (2c) de telle sorte que les parties linéaires du ressort hélicoïdal de cliquet sont en contact avec une surface supérieure de l'organe à cliquet (5).

2. Tendeur hydraulique selon la revendication 1, dans lequel le trou de ressort de cliquet a une forme en coupe transversale elliptique.

3. Tendeur hydraulique selon la revendication 1 ou 2, dans lequel un axe long de la forme en coupe transversale elliptique du ressort hélicoïdal de cliquet est orienté vers une direction axiale du piston.

4. Tendeur hydraulique selon la revendication 1, 2 ou 3, comprenant, en outre, un couvercle qui recouvre le trou de ressort de cliquet dans le carter.
